# NEUE EUROPÄISCHE PATENTSCHRIFT

(11) **EP 1 843 908 B2**
(45) Veröffentlichungstag und Bekanntmachung des Hinweises auf die Entscheidung über den Einspruch: **02.12.2015**
(45) Hinweis auf die Patenterteilung: 30.09.2009
(21) Anmeldenummer: 06701316.9
(22) Anmeldetag: 12.01.2006
(51) Int. Cl.: B60H 1/00

(54) **KRAFTFAHRZEUG-KLIMAANLAGE**
MOTOR VEHICLE AIR CONDITIONING SYSTEM
SYSTEME DE CLIMATISATION POUR UN VEHICULE A MOTEUR

(30) Priorität: 21.01.2005 EP 05290143
(43) Veröffentlichungstag der Anmeldung: 17.10.2007
(73) Patentinhaber: Mahle Behr France Rouffach S.A.S, 68250 Rouffach (FR)
(72) Erfinder: KLEIN, Henri, F-68000 Colmar (FR)
(74) Vertreter: Grauel, Andreas
(86) Internationale Anmeldenummer: PCT/EP2006/000200
(87) Internationale Veröffentlichungsnummer: WO 2006/077043

(56) Entgegenhaltungen:
- EP-A- 1 323 555
- FR-A- 2 400 161
- US-A- 4 665 971
- US-A- 5 211 604
- US-A1- 2002 007 944

## Beschreibung

Die Erfindung betrifft eine Kraftfahrzeug-Klimaanlage gemäß dem Oberbegriff des Anspruchs 1.

Bei Kraftfahrzeug-Klimaanlagen mit einer Fond-Belüftung ist die Versorgung des Fond-Bereichs mit ausreichend Luft, insbesondere mit einer etwas temperierten Luft, in aller Regel problematisch. Auf Grund der Kanallänge kann im Luftkanal ein zusätzliches Gebläse vorgesehen sein, welches die Luft nach hinten fördert. Eine derartige Ausgestaltung lässt keine separate Temperierung der dem Fondraum zugeführten Luft zu, so dass Front- und Fondbereich etwa mit Luft gleicher Temperatur versorgt werden.

Alternativ können zwei Klimaanlagen vorgesehen sein, was jedoch sehr aufwendig und teuer ist.

Ferner ist aus der US 5,211,604 eine Klimaanlage nach dem Oberbegriff des Anspruchs 1 bekannt.

Auch die FR 2 762 804 A1 offenbart eine Klimaanlage gemäß dem Oberbegriff von Anspruch 1.

Es ist Aufgabe der Erfindung, eine verbesserte aber relativ kostengünstige Kraftfahrzeug-Klimaanlage zur Verfügung zu stellen.

Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß ist eine Kraftfahrzeug-Klimaanlage vorgesehen, die für die Temperierung des Fondbereichs ausgelegt ist, mit einem Luftkanal für die Fond-Belüftung, wobei im Luftkanal für die Fond-Belüftung mindestens ein zusätzliches, zweites Gebläse mit Gebläsegehäuse angeordnet ist, und wobei es sich beim Luftkanal für die Fond-Belüftung um einen Kaltluflkanal handelt. Dadurch lässt sich über den Luftkanal, unterstützt von der Förderwirkung des zweiten Gebläses ausreichend Kaltluft in den Fondbereich transportieren, so dass eine ausreichende Kühlung möglich ist.

Das Gebläsegehäuse weist einen zusätzlichen, regelbaren Umluft-Einlass zum Ansaugen von Umluft aus dem Fahrzeuginnenraum auf. Dadurch lässt sich auf einfache Weise warme Umluft mit der von der Klimaanlage kommenden Kaltluft mischen, so dass dem Fondbereich nie wärmere Luft als dem Frontbereich zugeführt wird, was insbesondere bei geringen Außentemperaturen vorteilhaft ist.

Des Weiteren ist auch der Kaltluft-Einlass des Kaltluftkanals in das Gebläsegehäuse regelbar, so dass insgesamt auf einfache und relativ kostengünstige Weise eine Temperierung der dem Fondbereich zugeführten Luft möglich ist. Hierbei wird die Front-Klimaanlage nicht kompliziert und die Temperierung des Frontbereichs wird nicht oder nur unwesentlich beeinflusst.

Zur Temperierung ist eine Trommelklappe oder eine Kugelkappe, vorgesehen, welche in Abhängigkeit der gewünschten Temperatur im Fondbereich den Kaftluft-Einlass ganz oder teilweise freigibt oder verschließt und entsprechend den Umluft-Einlass verschließt oder teilweise oder ganz freigibt. Auf diese Weise ist eine sehr einfache und kostengünstige Regelung der Temperatur der dem Fondbereich zugeführten Luft möglich. Es sind zwei Kaltluft- und Umluft-Einlasspaare vorhanden, so ist je Einlasspaar eine Klappe vorgesehen, wobei die einzelnen Klappen miteinander gekoppelt sind, so dass die jeweils freigegebenen Öffnungen der Kaltluft-bzw. Umluft-Einlässe einander entsprechen. Dadurch lässt sich auch bei mehreren Klappen eine einfache Regelung verwirklichen.

Der Kaltluftkanal von der Klimaanlage zweigt bevorzugt nach dem Verdampfer und vor dem Heizer und ggf. Zuheizer ab. In diesem Bereich ist konstruktiv in der Regel ausreichend Raum für eine Abzweigung eines Luftkanals vorhanden, so dass das Luftführungsgehäuse der Klimaanlage nicht wesentlich kompliziert wird.

Es sind zwei Kaltluftkanäle vorgesehen, die dem zweiten Gebläse zugeführt werden. Natürlich können such mehr als zwei Kaltluftkanäle vorgesehen sein, jedoch sind aus konstruktiven Gesichtspunkten insbesondere bei Einbau des zweiten Gebläses zwischen den beiden Vordersitzen zwei symmetrisch zueinander ausgebildete Kaltluftkanäle vorteilhaft.

Die beiden Kaltluftkanäle werden dem zweiten Gebläse von einander gegenüberliegenden Seiten aus zugeführt.

Es sind zwei Umluftkanäle vorgesehen, die ebenfalls dem zweiten Gebläse zugeführt werden, auch diese werden dem zweiten Gebläse von einander gegenüberliegenden Seiten aus zugeführt, so dass sich insgesamt bevorzugt eine symmetrische Ausgestaltung ergibt.

Im Folgenden wird die Erfindung anhand eines Ausführungsbeispiels unter Bezugnahme auf die Zeichnung im Einzelnen erläutert. In der Zeichnung zeigen:
- Fig. 1: einen schematisch dargestellten Schnitt durch eine Kraftfahr- zeug-Klimaanlage mit abzweigendem Kaltluftkanal,
- Fig. 2: einen schematisch dargestellten Schnitt durch ein im Kaltluftka- nal angeordnetes Gebläse in der Betriebsstellung "100% kalt",
- Fig. 3: einen schematisch dargestellten Schnitt durch ein im Kaltluftka- nal angeordnetes Gebläse in einem Mischbetrieb,
- Fig. 4: einen schematisch dargestellten Schnitt durch ein im Kaltluftka- nal angeordnetes Gebläse in der Betriebsstellung "100% warm", und
- Fig. 5: eine perspektivische Ansicht der Klimaanlage.

Eine Kraftfahrzeug-Klimaanlage 1 mit einem ersten Gebläse 2, einem Filter 3, einem Verdampfer 4 einem Heizer 5 und einem Zuheizer 6 ist insbesondere für die Belüftung und Temperierung des Frontbereichs eines Kraftfahrzeuginnenraums ausgelegt. Hierfür saugt das erste Gebläse 2 Luft von der Umgebung und/oder dem Fahrzeuginnenraum an. Die Luft wird durch den Filter 3 und den Verdampfer 4 sowie gegebenenfalls auch durch den Heizer 5 und Zuheizer 6 geleitet und bedarfsgerecht, d.h. entsprechend der Einstellung, dem Fahrzeuginnenraum im Frontbereich, d.h. dem Fußraum und den Mittel- und Seitendüsen oder im Defrostfall insbesondere der Windschutzscheibe, zugeführt.

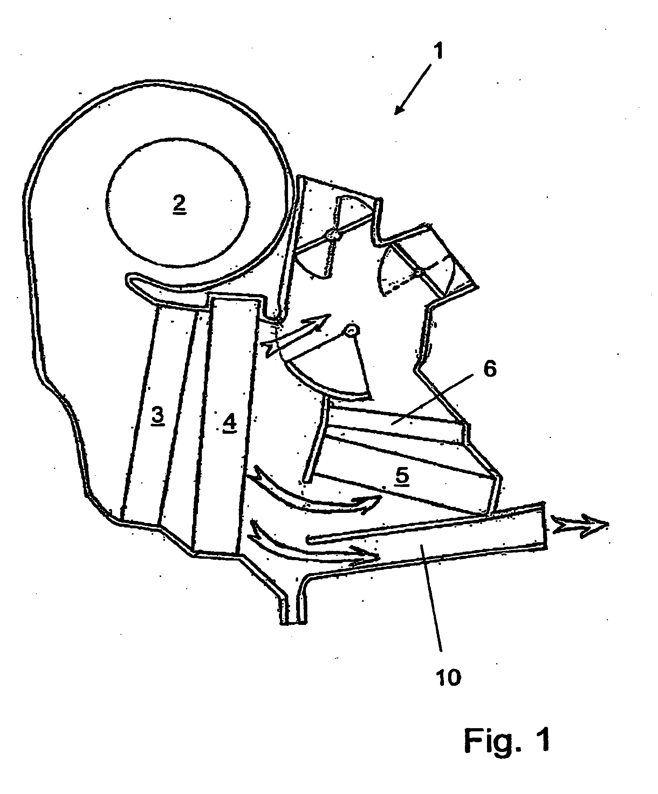

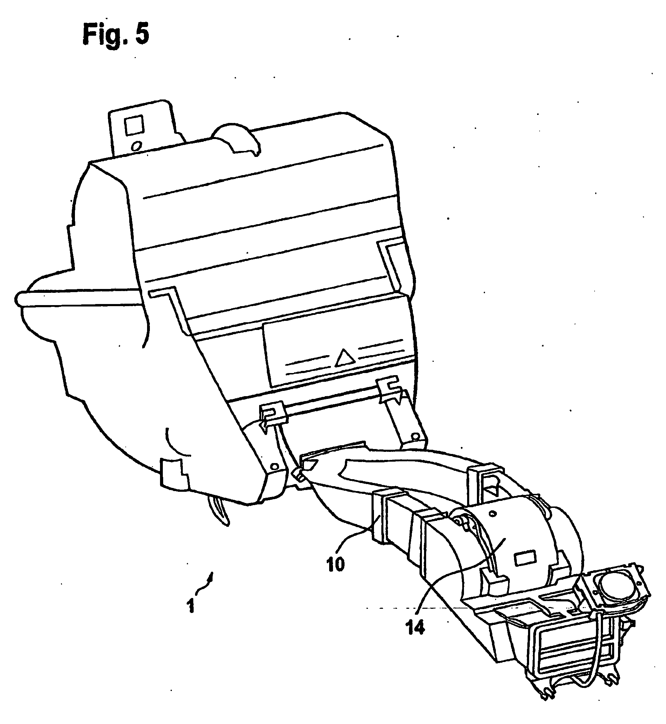

Ein Teil der vom Gebläse 2 angesaugten Luft wird über einen Luftkanal 10, wobei es sich auf Grund der Stelle der Abzweigung nach dem Verdampfer 4 und vor dem Heizer 5 und Zuheizer 6 um einen Kaltluftkanal handelt, dem Fondbereich zugeführt (siehe Fig. 1). Vorliegend sind zwei Luftkanäle 10 vorgesehen (siehe z.B. Fig. 5).

Die beiden Luftkanäle 10 münden über je einen von einer Klappe 11, vorliegend einer Trommelklappe, geregelten Kaltluft-Einlass 12, in ein Gebläsegehäuse 14 eines zweiten Gebläses 13, das vorliegend zwischen den Vordersitzen des Kraftfahrzeugs angeordnet ist. In einer Variante können die Klappen 11 auch als Kugelklappen ausgebildet sein, wobei diese im Falle der Ausbildung als Trommelklappen eine im Wesentlichen zylindrische Schließfläche und im Falle der Ausbildung als Kugelklappen eine im Wesentlichen sphärische Schließfläche aufweisen. Selbstverständlich ist auch die Ausbildung einer Klappe 11 als Trommel- und einer zweiten Klappe 11 Kugelklappe möglich. Die beiden Klappen 11 sind über eine Kinematik miteinander gekoppelt und verschwenkbar. Im Gebläsegehäuse 14 des zweiten Gebläses 13 sind zwei weitere Umluft-Einlässe 15 für vom Gebläse 13 über einen Umluftkanal (nicht näher dargestellt) angesaugte Umluft aus dem Fahrzeuginnenraum vorgesehen, welche vorliegend ebenfalls durch die gleichen Klappen 11 geregelt werden. Die vom Gebläse 13 angesaugte und gegebenenfalls auch durch dasselbe gemischte Luft wird anschließend dem Fondbereich des Fahrzeuginnenraums zugeführt. Die Rotationsachsen der Klappen 11 sind senkrecht zur Drehachse des Gebläses 13 angeordnet. In einer alternativen, nicht in den Figuren dargestellten Variante, können die Klappen 11 auch als halbkugelförmige Klappen mit einer Rotationsachse parallel zur Drehachse des Gebläses 13, ausgeführt sein.

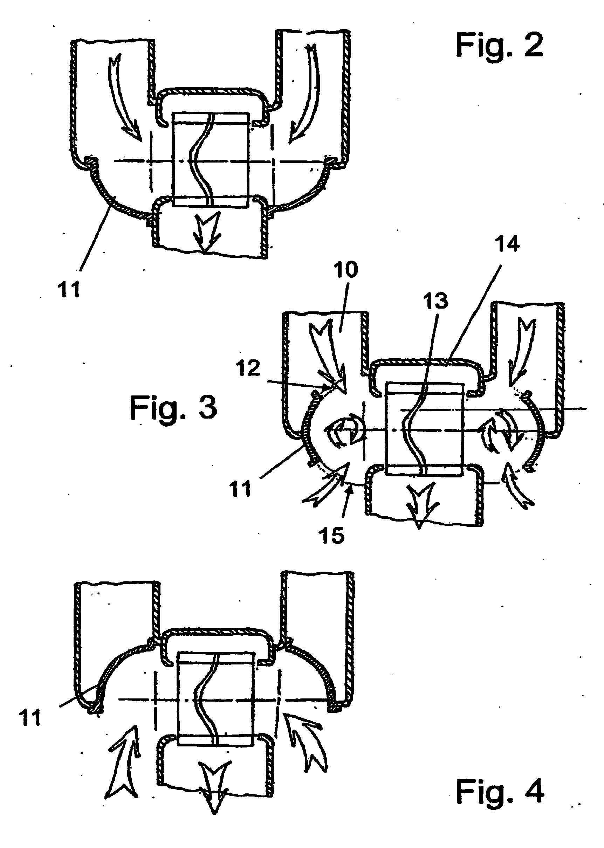

Bei der in Fig. 2 gezeigten Klappenstellung, verschließen die Klappen 11 jeweils die Umluft-Einlässe 15, so dass vom zweiten Gebläse 13 nur gekühlte Luft in den Fondbereich gefördert wird.

Eine Mischstellung der Klappen 11 ist in Fig. 3 dargestellt. Die Klappen 11 sind in etwa in eine Mittelstellung verschwenkt, wodurch vom Gebläse 13 über die Kanäle 10 gekühlte Luft und über die Umluft-Einlässe 15 Umluft angesaugt und in Richtung Fondbereich weiterbefördert werden kann.

In Folge der Möglichkeit, dass die von der Klimaanlage 1 kommende Kaltluft mit (warmer) Umluft vermischt werden kann, ermöglicht sich eine einfache bedarfsgerechte Temperierung der dem Fondbereich zugeführten Luft. Im Falle eines maximalen Luftdurchsatzbedarfs im Frontbereich kann der Kaltluftkanal 10 durch die Klappen 11, wie in Fig. 4 gezeigt, vollständig geschlossen werden, so dass die volle Leistung und insbesondere die gesamte vom ersten Gebläse 2 angesaugte Luft dem Frontbereich zur Verfügung steht. Im Fondbereich steht in diesem Fall allerdings nur die Umluft zur Zirkulation zur Verfügung.

## Patentansprüche

1. Kraftfahrzeug-Klimaanlage für die Temperierung des Frontbereichs mit einem ersten Gebläse (2), einem Verdampfer (4) und einem Heizer (5) und gegebenenfalls einem Zuheizer (6) sowie einem Luftkanal (10) für die Fond-Belüftung in dem mindestens ein zusätzliches, zweites Gebläse (13) mit Gebläsegehäuse (14) angeordnet ist, und dass es sich beim Luftkanal (10) für die Fond-Belüftung um einen Kaltluftkanal handelt, **dadurch gekennzeichnet, dass** das Gebläsegehäuse (14) einen zusätzlichen regelbaren Umluft-Einlass (15) zum Ansaugen von Umluft aus dem Fahrzeuginnenraum aufweist und zur Temperierung eine Trommelklappe oder einer Kugelklappe vorgesehen ist, welche in Abhängigkeit der gewünschten Temperatur im Fondbereich den Kaltluft-Einlass (12) des Kaltluftkanals in das Gebläsegehäuse (14) ganz oder teilweise freigibt oder verschließt und entsprechend den Umluft-Einlass (15) verschließt oder teilweise oder ganz freigibt und **dadurch gekennzeichnet, dass** zwei Kaltluftkanäle vorgesehen sind, die dem zweiten Gebläse (13) zugeführt werden, wobei die zwei Kaltluftkanäle dem zweiten Gebläse (13) von einander gegenüberliegenden Seiten aus zugeführt werden, wobei weiterhin zwei Umluftkanäle vorgesehen sind, die dem zweiten Gebläse (13) zugeführt werden, wobei die zwei Umluftkanäle dem zweiten Gebläse (13) von einander gegenüberliegenden Seiten aus zugeführt werden, wobei zwei Klappen (11) vorgesehen sind, jeweils eine zur Regelung des Kaltluftkanals und des Umluftkanals einer Seite, wobei die Klappen (11) über eine Kinematik miteinander gekoppelt sind.

2. Kraftfahrzeug-Klimaanlage nach Anspruch 1, **dadurch gekennzeichnet, dass** der Kaltluftkanal von der Klimaanlage (1) nach dem Verdampfer (4) und vor dem Heizer (5) und ggf. Zuheizer (6) abzweigt.

## Claims

1. Motor vehicle air conditioning system for the temperature control in the front region, with a first fan (2), an evaporator (4) and a heater (5) and an auxiliary heater (6), if fitted, and with an air duct (10) for rear ventilation wherein at least one additional second fan (13) with a fan housing (14) is located, the air duct (10) for rear ventilation being a cold air duct, **characterised in that** the fan housing (14) is provided with an additional controllable recirculation inlet (15) for drawing air from the vehicle interior, and **in that**, for temperature control, a drum- or ball-type damper is provided, which, in dependence on the desired temperature in the rear region, completely or partially clears or blocks the cold air inlet (12) of the cold air duct into the fan housing (14) or completely or partially clears or blocks the recirculation inlet (15) accordingly and **characterised in that** two cold air ducts leading to the second fan (13) are provided, wherein the two cold air ducts are routed to the second fan (13) from opposite sides, wherein further two recirculation ducts leading to the second fan (13) are provided, wherein the two recirculation ducts are routed to the second fan (13) from opposite sides, wherein two dampers (11) are provided, for respectively regulating the cold air duct and the recirculation duct of a side, wherein the dampers (11) are kinematically coupled together.

2. Motor vehicle air conditioning system according to claim 1, **characterised in that** the cold air duct branches off the air conditioning system (1) downstream of the evaporator (4) and upstream of the heater (5) and the auxiliary heater (6), if fitted.

## Revendications

1. Système de climatisation d'un véhicule automobile pour l'équilibre de température de la zone avant, comprenant un premier ventilateur (2), un évaporateur (4) et un radiateur (5) et, le cas échéant, un dispositif de chauffage supplémentaire (6), ainsi qu'un conduit d'air (10) pour la ventilation de la zone arrière, conduit d'air dans lequel est disposé au moins un deuxième ventilateur supplémentaire (13) comprenant un carter de ventilateur (14), et en ce que, concernant le conduit d'air (10) pour la ventilation de la zone arrière, il s'agit d'un conduit d'air froid, **caractérisé en ce que** le carter de ventilateur (14) présente une entrée d'air de circulation supplémentaire (15), réglable, servant à aspirer l'air de circulation provenant de l'habitacle du véhicule et, pour l'équilibre de température, il est prévu un volet à tambour ou un volet sphérique qui, en fonction de la température souhaitée dans la zone arrière, ouvre complètement ou partiellement, ou bien ferme, dans le carter de ventilateur (14), l'entrée d'air froid (12) du conduit d'air froid et, en conséquence, ferme ou bien ouvre partiellement ou complètement l'entrée d'air de circulation (15), et **caractérisé en ce qu'**il est prévu deux conduits d'air froid qui sont fournis au deuxième ventilateur (13), où les deux conduits d'air froid sont fournis au deuxième ventilateur (13), à partir de côtés placés à l'opposé l'un de l'autre, où il est prévu en outre deux conduits d'air de circulation qui sont fournis au deuxième ventilateur (13), où les deux conduits d'air de circulation sont fournis au deuxième ventilateur (13), à partir de côtés placés à l'opposé l'un de l'autre, où il est prévu deux volets (11) dont un volet sert à chaque fois, sur un côté, à la régulation du conduit d'air froid et du conduit d'air de circulation, où les volets (11) sont couplés l'un à l'autre par une cinématique.

2. Système de climatisation d'un véhicule automobile selon la revendication 1, **caractérisé en ce que** le conduit d'air froid bifurque, par rapport au système de climatisation (1), en aval de l'évaporateur (4) et en amont du radiateur (5) et, le cas échéant, du dispositif de chauffage supplémentaire (6).
